# DEMANDE DE BREVET EUROPEEN

(11) **EP 1 454 769 A1**
(43) Date de publication de la demande: **08.09.2004**
(21) Numéro de dépôt: 03004618.9
(22) Date de dépôt: 03.03.2003
(51) Int. Cl.: B60C 23/04, H04B 5/02

(54) **Dispositif de transmission de signaux par induction entre un circuit transpondeur et un circuit d'interrogation**

(71) Demandeur: Sokymat Identifikations Komponenten GmbH, 51580 Reichshof (DE)
(72) Inventeur: Bajahr, Frank, 51469 Bergisch Gladbach (DE)
(74) Mandataire: Laurent, Jean

(57) **Abrégé**

Le dispositif de transmission de signaux inductifs comprend un circuit transpondeur (1) ayant au moins une première bobine, et un circuit d'interrogation (3) ayant au moins une seconde bobine (4). Le circuit transpondeur est placé sur un objet (5) susceptible de tourner autour d'au moins un axe de rotation (9) passant par l'objet. Le circuit d'interrogation est placé sur une structure, qui peut être fixe, à laquelle l'objet est relié. Une bobine de couplage (2), munie d'au moins une spire décrivant un anneau, est montée sur la structure ou sur l'objet de manière coaxiale à l'axe de rotation de l'objet. Cette bobine de couplage sert d'interface de couplage inductif entre la première bobine et la seconde bobine de manière que la transmission de signaux inductifs soit sensiblement indépendante de la rotation de l'objet. Le circuit transpondeur est de type passif et comprend au moins un capteur de mesure d'un paramètre physique.

Le dispositif peut être utilisé dans le domaine automobile en plaçant le circuit transpondeur (1) et la bobine de couplage (2) sur une roue du véhicule (5) et le circuit d'interrogation (3) sur le châssis ou la carrosserie dudit véhicule.

## Description

L'invention concerne un dispositif de transmission de signaux par induction entre un circuit transpondeur et un circuit d'interrogation. Pour la transmission de signaux inductifs, le circuit transpondeur comprend une première bobine, et le circuit d'interrogation comprend une seconde bobine. Le circuit transpondeur est placé sur un objet susceptible de tourner autour d'au moins un axe de rotation passant par l'objet, alors que le circuit d'interrogation est placé sur une structure, qui peut être fixe, à laquelle l'objet est relié.

Dans une application automobile, l'objet tournant peut être par exemple une roue de véhicule, alors que la structure est par exemple la carrosserie ou le châssis du véhicule. Dans ce cas, il peut être envisagé que le circuit transpondeur comprenne au moins un capteur pour la mesure d'un paramètre physique. Il peut s'agir d'un capteur de pression pour la mesure de la pression des pneus du véhicule, d'un capteur de température, d'un capteur de force, d'un accéléromètre ou d'un autre type de capteur. Les mesures effectuées par le ou les capteurs du circuit transpondeur peuvent être transmises au circuit d'interrogation dans les signaux inductifs par exemple par modulation d'amplitude.

Comme le circuit transpondeur est placé sur l'objet tournant, la distance le séparant du circuit d'interrogation n'est pas constante lors de la rotation de l'objet. De ce fait, on constate lors de la transmission des signaux inductifs entre le circuit d'interrogation et le circuit transpondeur qu'une modulation d'amplitude parasite des signaux survient ce qui peut être un inconvénient important. Ainsi, il peut arriver lors d'opérations de démodulation dans l'unité réceptrice que les données reçues dans les signaux inductifs ne correspondent pas totalement aux données transmises. Cette perturbation sur les données transmises peut être dépendante aussi de la vitesse de rotation de l'objet. Plus la vitesse de rotation est élevée et plus cette perturbation peut être importante.

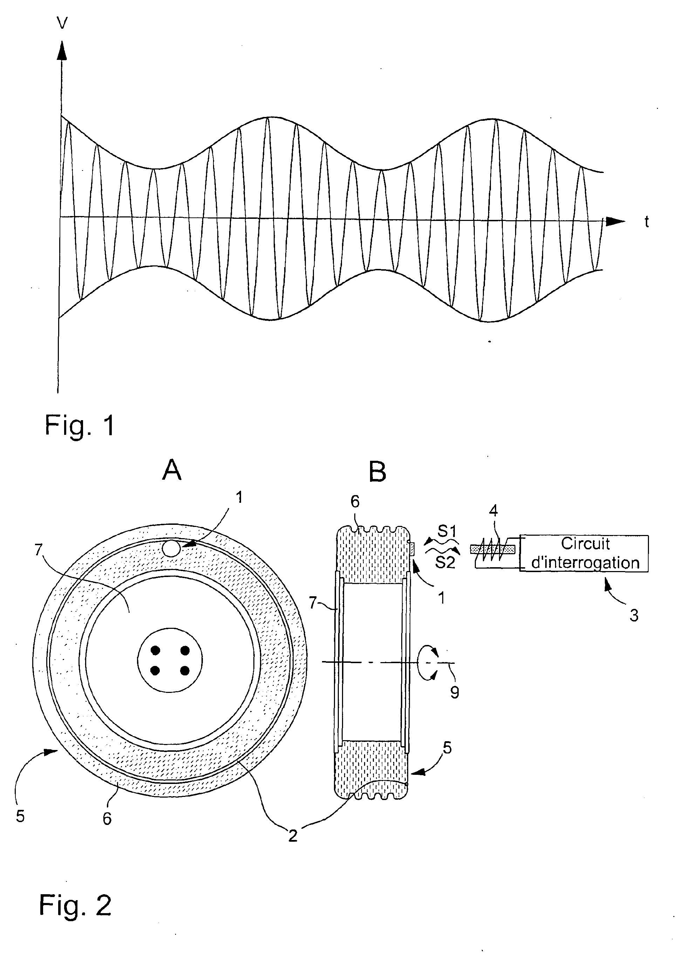

A titre illustratif, la figure 1 montre de manière simplifiée l'influence que peut avoir la rotation d'un objet sur l'amplitude des signaux inductifs captés par l'unité réceptrice. Des signaux inductifs sont tout d'abord transmis par l'unité émettrice à une fréquence porteuse déterminée et une amplitude déterminée. Les données modulées dans les signaux inductifs ne sont par contre pas représentées dans cette figure par simplification. Comme la distance séparant l'unité réceptrice de l'unité émettrice varie lors de la rotation de l'objet, l'amplitude des signaux inductifs captés, c'est-à-dire l'amplitude de la tension induite dans la bobine de l'unité réceptrice, change.

Sur la figure 1, cette variation d'amplitude est illustrée par l'enveloppe des signaux inductifs captés par l'unité réceptrice. Cette enveloppe est représentée simplement de forme sinusoïdale correspondant à une vitesse de rotation de l'objet constante. Toutefois, il est clair que la forme de cette enveloppe n'est pas en réalité sinusoïdale, car l'amplitude du champ magnétique créé par la bobine émettrice ne décroît pas linéairement avec la distance séparant la bobine émettrice de la bobine réceptrice.

Dans certaines réalisations de dispositifs de transmission de signaux, il a également été proposé de transmettre des signaux haute fréquence entre le circuit transpondeur et le circuit d'interrogation. Ces signaux haute fréquence utilisés permettent de ne pas être trop dépendant de la rotation de l'objet sur lequel le circuit transpondeur est monté. Cependant en utilisant un tel dispositif qui produit des signaux haute fréquence (par exemple 2,45 GHz) dans une application automobile, il a été montré que l'eau peut avoir une influence négative sur la performance du dispositif. De plus, comme le circuit transpondeur transmet des signaux haute fréquence, il doit en principe être muni de sa propre source d'énergie, telle qu'une batterie. Ceci peut être également un inconvénient, car dans ce cas le circuit transpondeur consomme de l'énergie même si le circuit d'interrogation ne l'interroge pas.

Ainsi, un but de la présente invention consiste à fournir un dispositif de transmission de signaux inductifs qui comprend des moyens supprimant une modulation d'amplitude parasite non désirée des signaux inductifs lors de la rotation de l'objet par rapport à la structure afin de pallier les inconvénients de l'art antérieur cité ci-devant.

Un autre but de la présente invention consiste à fournir un dispositif de transmission de signaux inductifs qui soit simple à réaliser tout en réduisant les coûts de fabrication, et consomme peu d'énergie électrique.

A cet effet, l'invention concerne un dispositif de transmission de signaux inductifs cité ci-devant qui se caractérise en ce qu'une bobine de couplage, munie d'au moins une spire, est montée sur la structure ou sur l'objet de manière coaxiale à l'axe de rotation de l'objet, ladite bobine de couplage servant d'interface de couplage inductif entre la première bobine et la seconde bobine.

Un avantage du dispositif de transmission de signaux inductifs, selon l'invention, est qu'il n'est pas nécessaire de savoir, si l'objet tourne autour de son axe de rotation ou est au repos, car la transmission desdits signaux est sensiblement indépendante de la rotation de l'objet. La bobine de couplage permet de servir d'interface entre le circuit d'interrogation et le circuit transpondeur indépendamment de la distance séparant la première bobine du circuit transpondeur de la seconde bobine du circuit d'interrogation. Bien entendu, pour ne pas être influencé par la rotation de l'objet, il est nécessaire que la bobine de couplage, ayant au moins une spire annulaire, soit montée sur la structure ou sur l'objet de manière coaxiale à l'axe de rotation de l'objet. Ainsi grâce à cette bobine de couplage, la première bobine et la seconde bobine peuvent être considérées comme équidistantes même avec une rotation de l'objet.

Dans un mode avantageux de réalisation du dispositif, le circuit transpondeur comprend un transpondeur passif. De cette manière, le circuit transpondeur n'est alimenté que par les signaux inductifs produits par le circuit d'interrogation. Tant que le circuit d'interrogation ne produit pas de signaux inductifs, le circuit transpondeur reste donc au repos sans alimentation électrique. De plus, le dispositif de transmission de signaux inductifs est indépendant des tolérances de fabrication notamment concernant la fréquence de résonance d'ensembles résonants de chaque circuit.

Comme les bobines sont proches l'une de l'autre, les signaux inductifs sont à basse fréquence par exemple de l'ordre de 125 kHz. De préférence, le circuit transpondeur comprend un ensemble résonant constitué notamment par l'inductance de la première bobine et un condensateur monté en parallèle. Les valeurs de l'inductance et du condensateur sont choisies de telle manière à définir une fréquence de résonance proche de la fréquence des signaux transmis par le circuit d'interrogation. Ceci permet d'avoir un maximum d'amplitude des signaux inductifs captés, et de faciliter le stockage d'énergie pour l'alimentation des composants du circuit transpondeur.

La bobine de couplage est avantageusement de plus grande dimension que la première bobine du circuit transpondeur et la seconde bobine du circuit d'interrogation. Cette bobine de couplage peut ne comprendre qu'une seule spire annulaire sous forme d'une boucle fermée. Les plans ou les axes des spires de chaque bobine sont disposés parallèlement les uns par rapport aux autres. De plus, la première bobine, vue dans la direction axiale se trouve dans la boucle fermée de la bobine de couplage.

De manière avantageuse, le dispositif de transmission de signaux inductifs est utilisé pour un véhicule. Le circuit transpondeur et la bobine de couplage sont placés de préférence sur une des roues du véhicule, et le circuit d'interrogation est placé sur une structure fixe qui est par exemple le châssis ou la carrosserie du véhicule. Le circuit transpondeur peut également comprendre au moins un capteur pour mesurer un paramètre physique. Il peut s'agir par exemple d'un capteur de pression pour mesurer la pression d'un pneu du véhicule, d'un capteur de température ou d'un capteur pour la mesure de la déformation d'un pneu. Les mesures effectuées par le ou les capteurs peuvent être mémorisées dans le circuit transpondeur lorsqu'il est alimenté, ou transférées par les signaux inductifs au circuit d'interrogation. Les données sont transmises dans les signaux inductifs de préférence par modulation d'amplitude.

Les buts, avantages et caractéristiques du dispositif de transmission de signaux inductifs apparaîtront mieux dans la description suivante d'au moins une forme d'exécution illustrée par les dessins sur lesquels :
- la figure 1 déjà citée montre de manière simplifiée l'influence de la rotation d'un objet, tel qu'une roue de véhicule, sur l'amplitude des signaux inductifs captés par la bobine d'une unité réceptrice d'un dispositif de transmission de signaux traditionnel;
- la figure 2 montre schématiquement une vue de face A et une vue de côté B partiellement en coupe d'une forme d'exécution du dispositif de transmission de signaux inductifs, selon l'invention, monté sur une roue et un châssis d'un véhicule;
- la figure 3 montre schématiquement les diverses parties du dispositif de transmission de signaux inductifs selon l'invention, et
- la figure 4 montre des graphiques relatifs à la transmission de données par modulation d'amplitude des signaux inductifs entre le circuit d'interrogation et le circuit transpondeur du dispositif de transmission de signaux inductifs selon l'invention.

On va décrire ci-après un mode préféré de réalisation du dispositif de transmission de signaux inductifs dans le domaine automobile. Il est à noter que dans la description suivante, tous les composants électroniques du dispositif de transmission de signaux inductifs, qui sont bien connus d'un homme du métier dans ce domaine technique, ne seront pas expliqués en détail.

A la figure 2, le dispositif de transmission de signaux comprend un circuit transpondeur 1 monté de préférence sur le pneu 6 d'une roue 5 de véhicule, une bobine de couplage magnétique 2 de forme annulaire montée également sur le pneu 6, et un circuit d'interrogation 3 monté sur une structure fixe du véhicule, non représentée, telle que le châssis ou la carrosserie.

La bobine de couplage 2 comprend une ou plusieurs spires formant au moins une boucle fermée. Cette bobine de couplage peut être intégrée dans la structure du pneu 6 du véhicule lors de sa fabrication par exemple, ou fixée du côté extérieur ou intérieur du pneu. De préférence, la forme de cette bobine de couplage est circulaire. Cette bobine de couplage est positionnée sur le pneu 6 de manière coaxiale à un axe de rotation 9 qui passe au centre de la jante 7 de la roue du véhicule 5. Ainsi, une rotation de la roue autour de son axe de rotation ne modifie pas la position de cette bobine de couplage, notamment par rapport au circuit d'interrogation.

Bien entendu, cette bobine de couplage 2 peut également être montée sur la structure fixe de manière coaxiale à l'axe de rotation 9 de la roue. Toutefois, cette construction est plus compliquée et peut causer certains problèmes de couplage magnétique, car la carrosserie ou le châssis du véhicule est généralement métallique.

Le circuit transpondeur 1 comprend une première bobine non représentée sur cette figure. La première bobine peut être réalisée par exemple sur une plaque à circuit imprimé souple ou rigide qui porte le circuit intégré transpondeur. Cette première bobine peut comprendre des spires disposées dans un même plan sous forme d'une spirale ou enroulée sous forme hélicoïdale autour d'un noyau magnétique. De préférence la plan ou l'axe des spires de cette première bobine est sensiblement parallèle au plan ou à l'axe de la bobine de couplage 2 pour un meilleur couplage magnétique entre les deux bobines. La première bobine, vue dans la direction axiale de la bobine de couplage se trouve par exemple à l'intérieur de la ou des spires fermées de la bobine de couplage.

Le circuit transpondeur 1 peut être fixé sur un côté extérieur du pneu 6 comme montré sur la figure 2, sur un côté intérieur du pneu, ou sur la jante 7. Comme pour la bobine de couplage, il pourrait être envisagé d'intégrer le circuit transpondeur dans la masse du pneu 6 lors de sa réalisation. Cependant, l'incorporation du circuit transpondeur dans la masse du pneu peut poser certains problèmes de fabrication et ne permet de changer ledit circuit en cas de panne.

Le circuit d'interrogation 3 comprend une seconde bobine 4, montrée avec un noyau magnétique pour concentrer les lignes de force du champ magnétique afin d'améliorer le facteur de qualité Q de cette bobine. Les spires de cette bobine peuvent être enroulées de manière hélicoïdale autour du noyau magnétique. Comme pour la première bobine, le plan ou l'axe des spires de cette seconde bobine est sensiblement parallèle au plan ou à l'axe de la bobine de couplage 2. De préférence, cette seconde bobine 4 vue dans la direction axiale de la bobine de couplage 2 se trouve à l'intérieur de la ou des spires fermées de la bobine de couplage.

Avec cette configuration des bobines énoncées ci-dessus, il est possible de transmettre des signaux inductifs S1 et S2 par couplage magnétique entre les deux circuits 1 et 3 de manière optimale. La fréquence porteuse desdits signaux inductifs est de préférence de l'ordre de 125 kHz, c'est-à-dire à basse fréquence. On comprend donc qu'avec la bobine de couplage positionnée de manière coaxiale à l'axe de rotation de la roue 5, la distance séparant le circuit transpondeur 1 du circuit d'interrogation 3 n'a plus d'importance. La distance rapprochée entre chaque bobine peut ainsi rester constante même si l'objet est en rotation autour de son axe de rotation. De ce fait, aucune modulation d'amplitude des signaux inductifs captés autre que la modulation nécessaire à la transmission des données entre les deux circuits n'apparaît dans l'unité réceptrice des signaux de l'un ou l'autre circuit 1 et 3.

Comme le circuit transpondeur 1 est monté sur le pneu 6 de la roue 5, il peut comprendre au moins un capteur de mesure d'un paramètre physique, tel que la pression du pneu, la température, la déformation du pneu, la vitesse de rotation. Les mesures effectuées par le capteur sont transmises par modulation d'amplitude dans les signaux inductifs S2 à destination du circuit d'interrogation 3. Toutefois, comme le transpondeur du circuit transpondeur 1 est de préférence un transpondeur passif sans sa propre source d'alimentation, le circuit d'interrogation 3 doit toujours transmettre des signaux inductifs S1 à destination du circuit transpondeur 1. Ainsi, le circuit transpondeur 1 peut retirer des signaux inductifs reçus l'énergie électrique nécessaire à son fonctionnement.

Pour un bon couplage magnétique entre les bobines, il doit être tenu compte de la distance entre chacune de ces bobines, de l'orientation de l'axe des spires et de la surface de réception des signaux inductifs de chaque bobine. Comme la dimension de la bobine du circuit transpondeur est de petite dimension, la bobine de couplage a été choisie avec un diamètre de grande dimension pour assurer un bon couplage magnétique. Le nombre de spires de la première bobine est de préférence supérieur au nombre de spires de la bobine de couplage, qui peut ne comprendre qu'une seule spire fermée.

Cette bobine de couplage est située en périphérie du pneu 6 de la roue 5. La valeur d'inductance de cette bobine de couplage dépend de la surface décrite par la ou les spires fermées. De plus, l'inductance mutuelle de couplage entre la première bobine et la bobine de couplage ou entre la seconde bobine et la bobine de couplage dépend d'un facteur de couplage. Ce facteur de couplage tient compte du rayon de chaque bobine, de l'orientation des spires de chaque bobine et de la distance séparant chaque bobine. Comme le calcul de ces différents paramètres est bien connu dans le domaine du couplage magnétique, il n'est énoncé que les éléments essentiels à tenir compte pour un bon dimensionnement de chaque bobine.

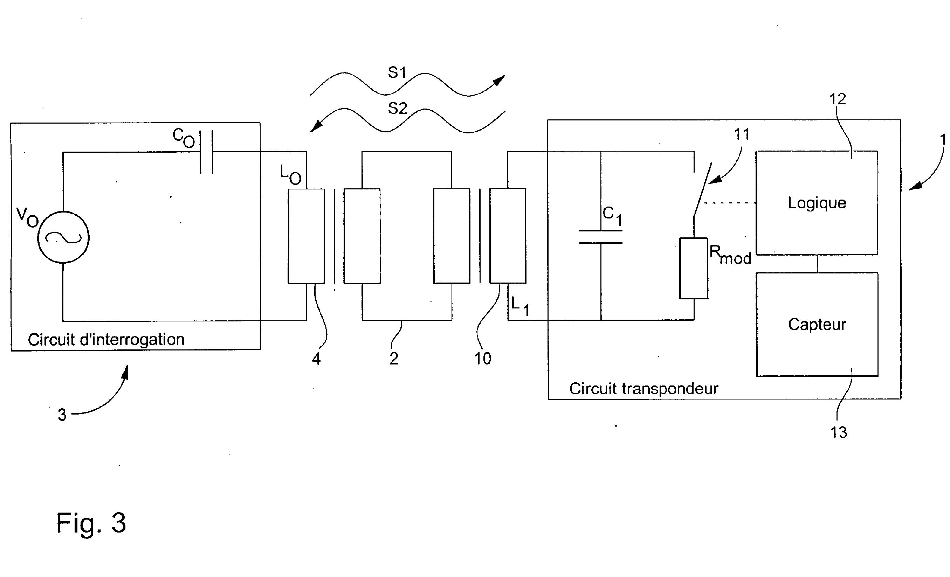

Les différents composants électroniques du dispositif de transmission de signaux inductifs sont présentés de manière simplifiée à la figure 3. Il est à noter que les composants de cette figure, qui correspondent à ceux de la figure 2, portent des signes de référence identiques. Il est montré notamment que la bobine de couplage 2 sert d'interface de couplage magnétique entre la première bobine 10 et la seconde bobine 4.

Le circuit d'interrogation 3 est présenté sous forme schématique. Il peut être alimenté électriquement par l'intermédiaire de la batterie du véhicule. Il comprend un générateur de signaux alternatifs, présenté comme une source de tension alternative Vo, connecté à un condensateur Co en série avec une bobine 4 de valeur d'inductance Lo. Normalement, le générateur de signaux alternatifs comprend un oscillateur et un modulateur de données, qui sont connectés à un dispositif d'entraînement d'antenne, non représenté sur la figure 3. L'oscillateur produit des signaux à une fréquence déterminée par exemple 125 kHz, qui correspond à la fréquence porteuse des signaux inductifs à transmettre par la seconde bobine 4, alors que le modulateur permet de connecter ou déconnecter l'oscillateur afin d'ajouter aux signaux de l'oscillateur des données numériques.

Les signaux modulés en amplitude, qui sortent du dispositif d'entraînement, représentent une séquence binaire d'information S1 à transmettre au circuit transpondeur. Chaque élément binaire de la séquence est défini sur une période déterminée. Un élément binaire de la séquence binaire vaut 1 quand l'amplitude des signaux est maximale, alors qu'un élément binaire de la séquence binaire vaut 0 quand l'amplitude des signaux est proche de 0 dans au moins un laps de temps dans une période de temps déterminée de l'élément binaire. Cette modulation en amplitude par connexion ou déconnexion de l'oscillateur est appelée une modulation OOK (On-Off-Keying en terminologie anglaise). Les données à transmettre concerne par exemple la commande de mise en fonction du circuit transpondeur, la commande de transmission de données, une temporisation spécifique ou des paramètres à mémoriser dans ledit circuit transpondeur.

Dans le circuit d'interrogation 3, il est également prévu un démodulateur, non représenté, relié à la seconde bobine 4 afin de démoduler des données transmises dans les signaux inductifs S2 provenant du circuit transpondeur 1. Une unité à microprocesseur peut recevoir les données démodulées par le démodulateur pour le traitement de ces données.

Le circuit dénommé P4095, produit par la société EM Microelectronic-Marin SA en Suisse, peut être utilisé comme circuit d'interrogation 3.

Le circuit transpondeur 1 est présenté également sous forme schématique. Les éléments de ce circuit ne sont relatés que de manière sommaire, car ils font partie des connaissances générales d'un homme du métier dans ce domaine technique. Le circuit transpondeur comprend notamment un ensemble résonant constitué par la première bobine 10 de valeur inductive L1, un condensateur C1 monté en parallèle, et une résistance Rmod en série avec un interrupteur 11, qui sont connectés à la première bobine 10 et au condensateur C1. La résistance Rmod est connectée en parallèle à la première bobine 10 et au condensateur C1 lorsque l'interrupteur 11 est fermé. La commande de l'interrupteur 11 est réalisée par une partie logique 12 du transpondeur. En commandant la fermeture et l'ouverture de l'interrupteur il est possible de moduler en amplitude des signaux inductifs S2 pour la transmission de données au circuit d'interrogation.

Les valeurs de l'inductance L1 et du condensateur C1 sont choisies de telle manière à produire une amplitude maximale d'oscillation lors de la réception des signaux inductifs. La fréquence de résonance de l'ensemble résonant est ainsi fixée en fonction de la fréquence porteuse des signaux inductifs reçus. Lors de la réception des signaux inductifs, le circuit transpondeur 1 stocke l'énergie électrique reçue dans un condensateur spécifique, non représenté, de manière à assurer l'alimentation électrique de tous les composants du circuit transpondeur. De plus, des signaux d'horloge de cadencement de diverses opérations effectuées notamment dans la partie logique 12 est également tirée des signaux inductifs captés par la bobine 10. Cette partie logique peut comprendre au moins une mémoire pour stocker tout type de données.

Le circuit transpondeur 1 comprend encore au moins un capteur de mesure 13 d'un paramètre physique. Le capteur peut être un capteur de pression pour la mesure de la pression du pneu sur lequel le circuit transpondeur est monté, un capteur de température, un capteur pour la mesure de la déformation du pneu ou un capteur de vitesse ou d'accélération. Une combinaison de plusieurs capteurs peut être aussi envisagée. Le ou les capteurs 13 et la partie logique 12 peuvent être réalisés dans un même substrat semi-conducteur, tel que du silicium.

Lorsque le circuit transpondeur 1 est en état de fonctionnement, les mesures effectuées par le ou les capteurs sont mémorisées et traitées dans la partie logique 12 afin de commander la fermeture ou l'ouverture de l'interrupteur 11 pour la transmission de ces données dans les signaux inductifs S2. La variation d'amplitude d'oscillation de l'ensemble résonant du circuit transpondeur peut être détectée par la bobine 4 du circuit d'interrogation 3 à l'aide du couplage magnétique effectué par la bobine de couplage 2.

Il est à noter que la transmission des données ou séquence binaire est faite par le circuit transpondeur sans interrompre l'oscillation de l'ensemble résonant. La fréquence porteuse des signaux inductifs S2 est donc sensiblement la même que la fréquence porteuse de signaux inductifs S1. Chaque élément binaire de la séquence est défini sur une période déterminée. Un élément binaire de la séquence binaire vaut 1 quand l'amplitude des signaux est maximale, alors qu'un élément binaire de la séquence binaire vaut 0 quand l'amplitude des signaux est diminuée d'une certaine valeur par mise en parallèle de la charge résistive Rmod dans l'ensemble résonant.

Le circuit dénommé P4150, produit par la société EM Microelectronic-Marin SA en Suisse, peut être utilisé comme circuit transpondeur 1. Le transpondeur de ce circuit est passif et fonctionne à basse fréquence, par exemple à 125 kHz.

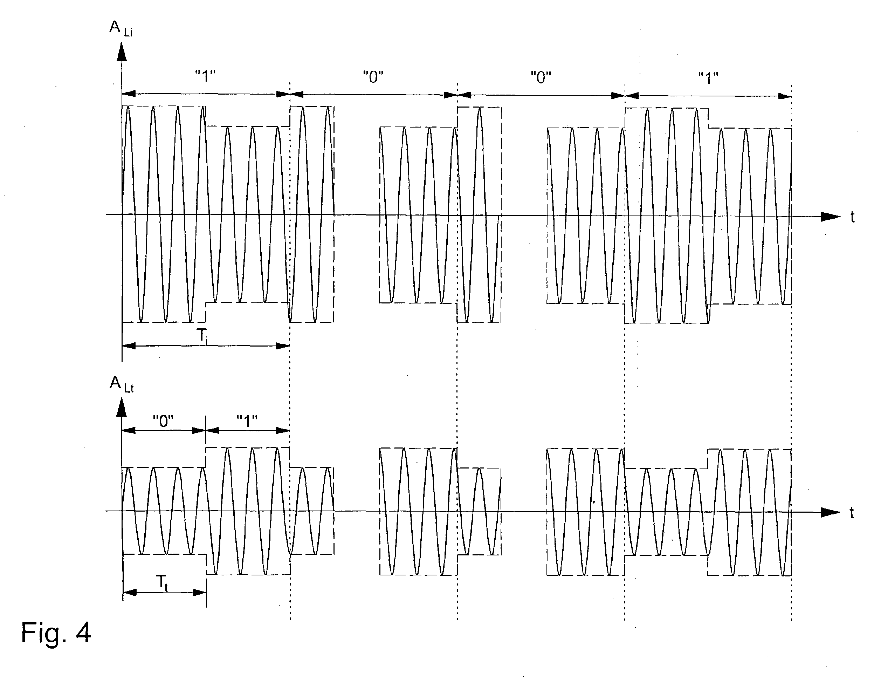

Pour représenter de manière simplifiée la forme dans le temps des signaux inductifs transmis entre le circuit d'interrogation et le circuit transpondeur, la figure 4 montre sur le graphe supérieur des signaux inductifs transmis par le circuit d'interrogation et sur le graphe inférieur des signaux inductifs transmis par le circuit transpondeur.

Le graphe supérieur et le graphe inférieur montrent la variation d'amplitude A_{Li} et A_{Lt} des signaux inductifs à fréquence porteuse déterminée en fonction de données à transmettre. Les données sont transmises selon une séquence binaire traditionnelle obtenue par modulation d'amplitude. Dans le graphe supérieur, un élément binaire de la séquence binaire vaut 1 sur une période déterminée Tᵢ quand l'amplitude des signaux est maximale, alors qu'un élément binaire de la séquence binaire vaut 0 quand l'amplitude des signaux est proche de 0 pendant au moins un laps de temps dans la période déterminée d'un élément binaire. Dans le graphe inférieur, un élément binaire de la séquence binaire vaut 1 sur une période déterminée Tₜ quand l'amplitude des signaux est maximale, alors qu'un élément binaire de la séquence binaire vaut 0 quand l'amplitude des signaux est diminuée d'une certaine valeur. La période déterminée Tₜ est inférieure à la période déterminée Tᵢ de manière à distinguer les données transmises des données reçues.

A partir de la description qui vient d'être faite, de multiples variantes de réalisation du dispositif de transmission de signaux par induction peuvent être conçues par l'homme du métier sans sortir du cadre de l'invention défini par les revendications. Le dispositif peut être appliqué dans tout domaine dans lequel un objet est monté rotatif par rapport à une structure fixe. Il peut être monté en partie sur un rotor de pales d'hélicoptère, dans une turbine à vapeur, sur un carrousel, ou sur toute autre machine à rotor. Il peut être prévu que la bobine de couplage magnétique ait une forme polygonale tout en étant positionnée de manière coaxiale par rapport à l'axe de rotation d'un objet tournant, tel que la roue du véhicule. Le circuit d'interrogation et le circuit transpondeur peuvent être munis chacun d'une bobine d'émission et d'une bobine de réception des signaux inductifs. Il peut être utilisé une modulation en fréquence pour transmettre les données dans les signaux inductifs au lieu d'une modulation d'amplitude. De plus, la fréquence des signaux inductifs transmis peut être différente dans chaque circuit.

## Revendications

1. Dispositif de transmission de signaux inductifs (S1, S2), le dispositif comprenant un circuit transpondeur (1) ayant au moins une première bobine (10), ledit circuit transpondeur étant placé sur un objet (5) susceptible de tourner autour d'au moins un axe de rotation (9) passant par l'objet, et un circuit d'interrogation (3) ayant au moins une seconde bobine (4), ledit circuit d'interrogation étant placé sur une structure à laquelle l'objet est relié, **caractérisé en ce qu'**une bobine de couplage (2), munie d'au moins une spire, est montée sur la structure ou sur l'objet de manière coaxiale à l'axe de rotation de l'objet, ladite bobine de couplage servant d'interface de couplage inductif entre la première bobine et la seconde bobine.

2. Dispositif selon la revendication 1, **caractérisé en ce que** la bobine de couplage ayant au moins une spire est une boucle fermée.

3. Dispositif selon l'une des revendications 1 et 2, **caractérisé en ce que** la dimension de la bobine de couplage annulaire (2) est plus grande que la dimension de la première bobine (10) du circuit transpondeur (1), et **en ce que** la première bobine vue dans la direction axiale de la bobine de couplage se trouve à l'intérieur de la boucle de la bobine de couplage.

4. Dispositif selon l'une des revendications précédentes, **caractérisé en ce que** le plan ou l'axe des spires de la première bobine (10) est disposé parallèle au plan ou à l'axe des spires de la seconde bobine (4), ainsi qu'au plan et à l'axe de la spire de la bobine de couplage (2).

5. Dispositif selon l'une des revendications précédentes, l'objet tournant étant une roue de véhicule et la structure fixe étant une partie de la carrosserie ou du châssis dudit véhicule, **caractérisé en ce que** le transpondeur du circuit transpondeur (1 ) est passif, et **en ce que** le circuit d'interrogation (3) transmet des signaux inductifs (S1) à une fréquence de résonance déterminée pour que le circuit transpondeur retire des signaux inductifs reçus l'énergie électrique nécessaire à son fonctionnement.

6. Dispositif selon la revendication 5, **caractérisé en ce que** des données sont transmises par les signaux inductifs (S1, S2) par modulation d'amplitude du circuit d'interrogation au circuit transpondeur, et du circuit transpondeur au circuit d'interrogation, lesdits signaux inductifs à basse fréquence transmis entre les deux circuits ayant une fréquence porteuse identique.

7. Dispositif selon l'une des revendications précédentes, **caractérisé en ce que** le circuit transpondeur comprend au moins un capteur (13) pour la mesure d'un paramètre physique, et **en ce que** le circuit transpondeur (1) transmet des signaux inductifs (S2) de données relatives aux mesures effectuées par ledit capteur.

8. Dispositif selon la revendication 7, **caractérisé en ce que** le circuit transpondeur comprend un capteur de mesure de pression et/ou un capteur de mesure de température.

9. Dispositif selon l'une des revendications 7 et 8, **caractérisé en ce que** le circuit transpondeur comprend une partie logique (12) connectée à au moins un capteur de mesure et à un ensemble résonant, qui comprend, montés en parallèle, la première bobine (10), un condensateur (C1) et une charge résistive (Rmod) en série avec un commutateur (11), et **en ce que** la partie logique commande le commutateur de manière à moduler en amplitude les signaux inductifs à transmettre en fonction des mesures effectuées par le ou les capteurs.

10. Dispositif selon la revendication 9, **caractérisé en ce que** la partie logique (12) et le ou les capteurs (13) sont réalisés dans un même substrat semi-conducteur.
